# EUROPEAN PATENT APPLICATION

(11) **EP 2 849 184 A2**
(43) Date of publication of application: **18.03.2015**
(21) Application number: 13185883.9
(22) Date of filing: 25.09.2013
(51) Int. Cl.: G21B 1/13

(54) **A cooled divertor module for plasma treatment**

(30) Priority: 12.09.2013 LV 130131
(71) Applicant: Latvijas Universitates agentura "Latvijas Universitates Fizikas instituts", 2169 Salaspils (LV)
(72) Inventor: Kravalis, Kalvis, 5001 Ogre (LV); Nikoluskins, Raimonds, 2169 Salaspils (LV); Platacis, Ernests, 5001 Ogre (LV); Poznaks, Alfreds, 1084 Riga (LV); Sisko, Andrejs, 1057 Riga (LV)
(74) Representative: Vitina, Maruta

(57) **Abstract**

The invention relates to the thermonuclear power industry, particularly, to a cooled divertor module for a tokamak type fusion reactor (tokamak) providing plasma treatment with liquid lithium. A cooled divertor module for plasma treatment comprises a module base (1) for the flow of a liquid lithium film (14), the said module base (1) is made of a material with a thermal conductivity coefficient not lower than 350 W/m/K, cooled, covered with a stainless steel layer with a thickness no more than 0.2 mm and oriented to the horizon at an angle of 15-45° and to the separatrix of the magnetic field at an angle of 10-25°; the separatrix crosses the module base (1) from above in its middle part; the liquid lithium feed system comprises a dosing system, placed outside a tokamak and connected with a liquid lithium reservoir (11) which includes bellows (9) with an adjustable drive mechanism (10), and a liquid lithium supply channel system (6) placed inside the tokamak and arranged in stainless steel sheets (4, 5) fitted with a heat exchange system (3), wherein each channel of the system (6) has a height of 0.1-0.3 mm and width of 2-7 mm and the distance between the channels is no more than 2 mm.

## Description

The invention relates to the thermonuclear power industry, particularly, to a cooled divertor module for a tokamak type fusion reactor (tokamak) providing plasma treatment with liquid lithium.

Operating of fusion reactors is based on the synthesis reaction between two isotopes of hydrogen - deuterium and tritium. In result of the reaction, one 14 MeV neutron forms which transmutes its power to a reactor casing. The second reaction product is a powerful 3.5 MeV alpha particle. Along with non-incinerated deuterium and tritium, and also with various kinds of contamination they form the so-called "fusion ash", which is forwarded to a divertor. 15-20% of the generated thermal energy is forwarded in this way. In modern experimental facilities that constitute the thermal load on the divertor surface at a level of 5 to 10 MW/m².

So far mainly divertors, coated with heat-resistant material (tungsten, graphite, silicon carbide) plates being cooled have been used. However, they have a number of disadvantages: increased surface erosion and/or corrosion, a short-term resource, poor absorption characteristics that impair the high-temperature plasma parameters.

Therefore, in parallel with a solid divertor there is considered the possibility to use liquid metals, for example, lithium.

One of solutions provides that a high-speed (up to 10 m/s) gallium jet or a drop shield for plasma treatment and power removal is used in the divertor. However, serious magnetohydrodynamic problems appear in the presence of the magnetic field at high speed of liquid metal.

There is known a divertor [Patent RU2051430], which contains a plate for receiving a high-energy particle stream, a material made from metal fibers and having capillary system for liquid lithium supply is fixed on the said plate. Thermal power is absorbed by evaporating lithium. For the heat removal there are arranged condenser plates placed in parallel with the magnetic field separatrix, a material made from metal fibers and having capillary system for lithium vapor condensing and liquid lithium removal is fixed on the said plates. However, lithium evaporation used in the known divertor can cause contamination of the chamber and lithium deposition on other tokamak design elements. If a large quantity of lithium vapor is in the tokamak chamber there exists a risk to extinguish the plasma. Besides, in the known divertor it is difficult to control the absorption of high-energy particles in the lithium vapor, so sufficient plasma treatment has not provided (plasma is not sufficiently cleaned).

There is offered a divertor 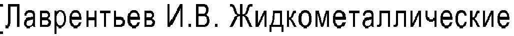 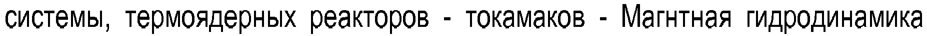 1990, Nº 2, P 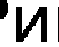 ra,3 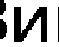 HaTHe, c. 105-124], which includes a plate (base) for the flow of a liquid lithium film, the said plate being oriented at an angle to the horizon and at an angle to a separatrix of the magnetic field, a liquid lithium feed system, and a liquid lithium collection system. It is possible to significantly reduce magnetohydrodynamic effects on a liquid metal flow being generated by strong magnetic field of tokamak through reducing the liquid metal flow speed. However, it is technically very difficult to build such a system and ensure its stable operation.

If a thin and slowly flowing liquid metal film is formed on the active surface of the divertor and the said film flows along the efficiently cooled base, the liquid lithium overheating and impermissibly intense evaporation is prevented. If the film speed is relatively low there takes place sufficiently intense interaction of high-energy particles, including tritium, in the said film so that the plasma is being treated. Formation of such thin and slowly flowing liquid metal film is a specific and up to now practically unresolved task.

Technical problem to be solved by the present invention is to develop a cooled divertor module for plasma treatment which provides formation of a uniform thin liquid lithium film with a thickness up to 0.2 mm and with a slow flow speed up to 10 - 20 mm/s on the divertor module base.

In a cooled divertor module for plasma treatment comprising: a module base for the flow of a liquid lithium film, the said module base being oriented at an angle to the horizon and at an angle to a separatrix of the magnetic field; a liquid lithium feed system and a liquid lithium collection system, according to the invention, the module base is made of a material with a thermal conductivity coefficient not lower than 350 W/m/K, cooled, covered with a stainless steel layer with a thickness no more than 0.2 mm and oriented to the horizon at an angle of 15-45° and to the separatrix of the magnetic field at an angle of 10-25°; the separatrix crosses the module base from above in its middle part; the liquid lithium feed system comprises: a dosing system, placed outside a tokamak and connected with a liquid lithium reservoir which includes bellows with an adjustable drive mechanism, and a liquid lithium supply channel system placed inside the tokamak and arranged in stainless steel sheets fitted with a heat exchange system, wherein each channel of the system has a height of 0.1-0.3 mm and width of 2-7 mm and the distance between the channels is no more than 2 mm.

The module base is made of a material with a thermal conductivity coefficient not lower than 350 W/m/K, usually copper, to remove the heat power of high-energy particles falling onto the liquid lithium film. Since the liquid lithium reacts with copper the module base is coated with a layer of stainless steel, which is resistant to liquid lithium action. Stainless steel layer thickness should be of up to 0.2 mm, this would not substantially impair the heat removal from the liquid lithium film. The module base is arranged cooled to prevent rapid evaporation of the lithium film that would cause contamination of a tokamak chamber and would cause lithium deposition on tokamak design elements. In addition, lithium evaporation may cause re-entering of "fusion ash" bonded by lithium into the plasma, thereby reducing the efficiency of the plasma treatment. The module base is oriented to the horizon at an angle of 15-45° to provide flowing of the liquid lithium film down at a speed of 5-10 mm/s. The module base is oriented to the separatrix of the magnetic field at an angle of 10-25° and the separatrix crosses the module base from above in its middle part to reduce the maximum thermal power of the high- energy particle falling onto the liquid lithium film, per area unit of the liquid lithium film, thus preventing the evaporation of lithium from the liquid lithium surface.

Such channels system for supply of liquid lithium is arranged dimensions of which ensure forming a laminar flow which is uniform across whole width of the module base. If the channel width is more than 7 mm, unstable lithium film near the side area of the divertor module for plasma treatment might form. If the channel width is less than 1 mm to ensure necessary supply of liquid lithium too high pressure might be needed. If the distance between the channels is greater (more) than 2 mm uniform liquid lithium film might not be created. The channel system is arranged in the stainless steel plates fitted with a heat exchanger to ensure the temperature of 250-400°C, at which lithium is a liquid, but it evaporates not so rapidly.

The dosing system which includes bellows with an adjustable drive mechanism ensures a smooth adjustable liquid lithium supply. The liquid lithium feed system is designed to provide an average liquid lithium supply of 0.1-2 mm³/s per millimeter of the width of the divertor module.

Fig. shows the scheme of the cooled divertor module for plasma treatment.

Z-axis is directed contrary to the direction of gravity, the xy plane is the plane of the horizon.

The module base 1 is made of copper and covered with a layer of stainless steel with a thickness of 0.2 mm and oriented to the horizon at an angle of 30° and to the separatrix (not shown) of the magnetic field at an angle of 15°; the separatrix crosses the module base 1 from above in its middle part. In the module base 1 cooling channels 2 are formed. A liquid lithium supply channel system 6 is arranged in stainless steel sheets 4 and 5 fitted with a heat exchange system 3 wherein each channel of the system 6 has a height of 0.2 mm and width of 2.5 mm and the distance between the channels is 2 mm. The liquid lithium supply channel system 6 is connected by means of a pipe system 7 which passes through the tokamak bottom wall 8 to a dosing system, placed outside the tokamak and comprising bellows 9 with an adjustable drive mechanism 10. The dosing system is connected with a liquid lithium reservoir 11. In the bottom of the module base 1 a liquid lithium collection system is arranged, which comprises a lithium collector 12 and a discharge pipe 13 passing through the tokamak bottom wall 8, the said pipe 13 being configured for delivery of contaminated liquid lithium to a purification system (not shown). During operating of the cooled divertor module for plasma cleaning a liquid lithium film14 appears on the module base 1.

The cooled divertor module for plasma treatment operates as follows. Liquid lithium is supplied from the liquid lithium reservoir 11 through the liquid lithium feed system adjusting the adjustable drive mechanism 10 so that an average liquid lithium supply is of 0.1-2 mm³/s per millimeter of the width of the divertor module. Liquid lithium is suplied through the channel system 6 which provides a uniform supply of liquid lithium throughout a width of the module base 1. Liquid lithium supply is adjusted so that throughout a surface of the module base 1 a thin liquid lithium film with a thickness of 0.1 mm is formed and the said liquid lithium film slowly flows down at a speed of 10 mm/s. The liquid lithium film absorbs high-energy particles. The module base 1 is cooled providing a liquid lithium temperature not higher than 400°C. Contaminated liquid lithium flowed in the form of film 14 along the base module 1 is collected in the collector 12 and through the pipe 13 passing through the tokamak bottom wall 8 is delivered to a purification system.

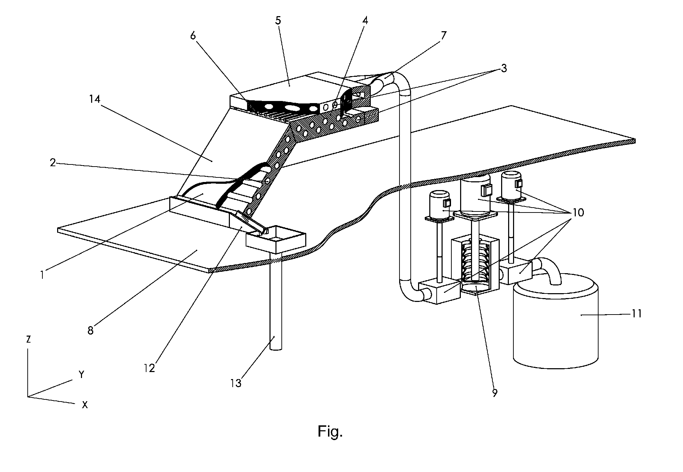

## Claims

1. A cooled divertor module for plasma treatment comprising:
- a module base (1) for the flow of a liquid lithium film (14), the said module base (1) being oriented at an angle to the horizon and at an angle to a separatrix of the magnetic field;
- a liquid lithium feed system and a liquid lithium collection system (12, 13) **characterized in that**:
the module base (1) is made of a material with a thermal conductivity coefficient not lower than 350 W/m/K, cooled, covered with a stainless steel layer with a thickness no more than 0.2 mm and oriented to the horizon at an angle of 15-45° and to the separatrix of the magnetic field at an angle of 10-25°;
the separatrix crosses the module base (1) from above in its middle part;
the liquid lithium feed system (6, 7, 9, 10, 11) comprises:
a dosing system, placed outside a tokamak and connected with a liquid lithium reservoir (11) which includes bellows (9) with an adjustable drive mechanism (10), and
a liquid lithium supply channel system (6) placed inside the tokamak and arranged in stainless steel sheets (4, 5) fitted with a heat exchange system (3),
wherein each channel of the system (6) has a height of 0.1-0.3 mm and width of 2-7 mm and the distance between the channels is no more than 2 mm.

2. The module according to Claim 1, wherein the liquid lithium feed system (6) is designed to provide an average liquid lithium supply of 0.1-2 mm³/s per millimeter of the width of the divertor module.
